(19) Europäisches Patentamt / European Patent Office / Office européen des brevets

(11) **EP 3 634 785 B1**

(12) **FASCICULE DE BREVET EUROPEEN**

(45) Date de publication et mention de la délivrance du brevet:
**28.04.2021 Bulletin 2021/17**

(21) Numéro de dépôt: **18737668.6**

(22) Date de dépôt: **07.06.2018**

(51) Int Cl.:
**B60C 23/06** (2006.01)

(86) Numéro de dépôt international:
**PCT/FR2018/051313**

(87) Numéro de publication internationale:
**WO 2018/224780 (13.12.2018 Gazette 2018/50)**

(54) **PROCÉDÉ DE DIAGNOSTIC DE L'ÉTAT DE GONFLAGE D'UN PNEUMATIQUE DE VEHICULE**

DIAGNOSEVERFAHREN ZUR FESTSTELLUNG DES ZUSTANDS EINES KRAFTFAHRZEUGSREIFENS

DIAGNOSTIC METHOD FOR DETERMINING THE OPERATING STATE OF A VEHICLE TIRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.06.2017 FR 1755125**

(43) Date de publication de la demande:
**15.04.2020 Bulletin 2020/16**

(73) Titulaire: **Renault S.A.S.**
**92100 Boulogne-Billancourt (FR)**

(72) Inventeurs:
• **SAINT-LOUP, Philippe**
**78760 Jouars Ponchartrain (FR)**
• **SALIOU, Sébastien**
**35000 Rennes (FR)**
• **PITA-GIL, Guillermo**
**75017 Paris (FR)**
• **DAVINS-VALLDAURA, Joan**
**75017 Paris (FR)**

(56) Documents cités:
EP-A1- 0 489 563    EP-A2- 2 077 197
FR-A1- 3 006 241

# EP 3 634 785 B1

**Description**

L'invention se rapporte à un procédé de diagnostic de l'état de gonflage d'un pneumatique de véhicule. Un tel procédé peut s'appliquer avantageusement mais non exclusivement à un véhicule automobile.

Cette invention entre dans le cadre de la détection de l'état de dégonflage d'au moins un des pneumatiques d'un véhicule automobile, par une méthode indirecte.

En général, le système de surveillance de la pression pneumatique (SSPP) a pour objectif d'alerter instantanément le conducteur en cas de perte de pression des pneumatiques, afin qu'il puisse procéder sans tarder au regonflage du pneumatique sous-gonflé ou procéder à son remplacement. Une telle mesure permet :

- Permet de réduire les émissions de $CO_2$ qui seraient causées par un sous-gonflage,
- D'allonger la durée de vie des pneumatiques et,
- D'augmenter la sécurité des passagers, en réduisant le risque d'éclatement des roues.

Les solutions SSPP actuelles ou méthodes directes, sont basées sur l'utilisation de capteurs de pression installés sur chaque valve des roues du véhicule en mesurant en temps réel les valeurs de pression et de température. Les inconvénients de ces solutions sont que :

- Les pneumatiques doivent être adaptés à l'installation de tels capteurs,
- Les capteurs de pression nécessitent une maintenance régulière pour minimiser le risque de défaut et la perte de détection,
- Les capteurs de pression engendrent des coûts de fabrication et d'entretien significatifs.

De nouvelles solutions sans capteur de pression (SSPP indirect) proposent de mettre en place un système de détection d'un sous-gonflage à partir de l'analyse de signaux présents sur un bus CAN (angle volant, vitesses angulaires, régime moteur et accélérations). Or, ces nouvelles solutions ou méthodes indirectes, sont plus complexes que les solutions actuelles, et leur mise au point est plus difficile. Le SSPP indirect est constitué d'algorithmes de détection de sous-gonflage qui font appel à un nombre important de paramètres de réglage. Afin d'optimiser tous ces paramètres et valider le réglage final obtenu, une base de données importante issue d'un grand nombre de phases de roulage, a été conçue. Par conséquent, le temps de simulation du système sur toute cette base de données fait que la mise au point manuelle des algorithmes de détection du SSPP est une tâche complexe, fastidieuse et chronophage.

Les systèmes SSPP indirects, basés sur les vitesses angulaires des roues sont constitués, entre d'autres, par deux types d'algorithmes de détection.

Le premier algorithme de détection se base sur une analyse comparative des rayons dynamiques des roues à partir des signaux de vitesses angulaires. En effet, une baisse du rayon dynamique a comme conséquence directe une augmentation de la vitesse angulaire de la roue. Cet algorithme appelé système de détection de crevaison (SDC) permet de détecter efficacement toute baisse de pression dans une roue.

Le deuxième algorithme est basé sur l'analyse spectrale des signaux de vitesses angulaires. Il a été constaté que la baisse de la pression engendre une diminution des fréquences caractéristiques des vibrations du véhicule et de la roue, apparaissant dans le signal de vitesse angulaire. Cet algorithme est capable de détecter un dégonflage de plusieurs roues, et il est très utile pour détecter les faibles pertes de pression accumulées après une longue période de roulage. Ce système est appelé système de détection de diffusion (SDD).

La demande FR2927019 décrit un procédé de diagnostic de l'état de gonflage d'au moins un pneumatique d'un véhicule automobile. Il s'agit d'un diagnostic effectué sur au moins un pneumatique équipant des paires de roues avant et arrière d'un véhicule automobile, chacune de ces paires étant associée à un essieu du véhicule, du type comportant une mesure des vitesses angulaires des roues du véhicule et une analyse des vitesses mesurées pour détecter ledit état de gonflage. Un inconvénient de ce procédé est qu'il ne permet ni de détecter un état de sous-gonflage de plusieurs pneumatiques d'un véhicule, ni de détecter plusieurs niveaux différents de sous-gonflage desdits pneumatiques.

Le document EP 0 489 563 A1 divulgue lui un procédé de diagnostic de l'état de gonflage de chaque pneumatique d'un véhicule comprenant une paire avant de pneumatiques droite et gauche et une paire arrière de pneumatiques droite et gauche, ledit procédé comprenant une première étape de détermination des rayons réels de chacune des quatre roues, et une étape de diagnostic de l'état de gonflage de chacune des roues à partir des valeurs des rayons relatifs déterminées à l'étape précédente.

Un procédé de diagnostic de l'état de gonflage d'au moins un pneumatique d'un véhicule selon l'invention, s'affranchit des inconvénients relevés dans l'état de la technique.

L'invention a pour objet un procédé de diagnostic de l'état de gonflage de chaque pneumatique d'un véhicule comprenant une paire avant de pneumatiques droite et gauche, et une paire arrière de pneumatiques droite et gauche.

La principale caractéristique d'un procédé selon l'invention est qu'il comprend les étapes suivantes,

- Une première étape de détermination du rayon réel $R_{FL}$, $R_{FR}$, $R_{RL}$ et $R_{RR}$ de chacune des quatre roues à partir de la détermination d'un premier critère $CR_1$ comparant les vitesses angulaires des paires de roues diagonales, d'un deuxième critère $CR_2$ comparant les vitesses angulaires des paires de roues avant et arrière, et d'un troisième critère $CR_3$ comparant les vitesses angulaires des paires de roues droite et gauche, et à partir d'une équation arbitraire reliant les quatre rayons réels $R_{FL}$, $R_{FR}$, $R_{RL}$, $R_{RR}$ entre eux, où $R_{FL}$, $R_{FR}$, $R_{RL}$ et $R_{RR}$ sont respectivement le rayon de la roue avant gauche, le rayon de la roue avant droite, le rayon de la roue arrière gauche et le rayon de la roue arrière droite,
- Une deuxième étape de détermination du rayon relatif de chacune des quatre roues en calculant le rapport de chacun des rayons réels déterminés à l'étape précédente sur un rayon réel maximum déterminé los de ladite étape précédente,
- Une étape de diagnostic de l'état de gonflage de chacune des roues à partir des valeurs des rayons relatifs déterminées à l'étape précédente.

Un tel procédé se base sur une analyse comparative des rayons dynamiques des roues, à partir des signaux de vitesses angulaires. Un tel procédé est complet car il permet de diagnostiquer un sous-gonflage de chacune des roues du véhicule, et il facilite la localisation du ou des pneumatiques en situation de dégonflage. Le rayon réel maximum correspond à la valeur maximale du rayon réel déterminé pour les quatre roues.

Avantageusement, l'équation arbitraire permettant de réaliser la première étape de détermination est donnée par :

$$R_{FL}^2 + R_{RR}^2 + R_{FR}^2 + R_{RL}^2 = 1$$

De façon préférentielle, l'étape de diagnostic consiste à comparer le rayon relatif de chacune des roues à une valeur seuil qui peut se calibrer de la manière suivante :

$$Seuil > \min(R_{rFL}, R_{rFR}, R_{rRL}, R_{rRR})$$

où $R_{rFL}$, $R_{rFR}$, $R_{rRL}$, et $R_{rRR}$ SOnt respectivement les rayons relatifs de la roue avant gauche, de la roue avant droite, de la roue arrière gauche et de la roue arrière droite.

Préférentiellement, l'étape de diagnostic s'effectue en attribuant une valeur de 1 au rayon relatif de la roue la plus gonflée et à exprimer la valeur du rayon relatif des autres roues en pourcentage du rayon de ladite roue la plus gonflée, puis en mesurant l'écart entre le rayon relatif de chaque roue et la valeur de 1, et enfin en comparant chaque écart mesuré avec une valeur seuil prédéterminée.

De façon avantageuse, les valeurs seuils sont mises au point à partir d'une base de données répertoriant les conditions et les résultats d'un grand nombre de tests réels, lesdites conditions étant représentées par au moins un paramètre à choisir parmi la masse du véhicule, le nombre de roues sous-gonflées, la pression des pneumatiques, le type de route empruntée par le véhicule et la météorologie.

Avantageusement, les trois critères sont déterminés à partir des équations suivantes :

$$CR_1 = \frac{\omega_{FR}^2 + \omega_{RL}^2}{\omega_{FL}^2 + \omega_{RR}^2} - 1$$

$$CR_2 = \frac{\omega_{RL}^2 + \omega_{RR}^2}{\omega_{FL}^2 + \omega_{FR}^2} - 1$$

$$CR_3 = \frac{\omega_{FR}^2 + \omega_{RR}^2}{\omega_{FL}^2 + \omega_{RL}^2} - 1$$

Avec

$$\omega_{FL} = \frac{V_{vehicule}}{R_{FL}}$$

$$\omega_{FR} = \frac{V_{vehicule}}{R_{FR}}$$

$$\omega_{RL} = \frac{V_{vehicule}}{R_{RL}}$$

$$\omega_{RR} = \frac{V_{vehicule}}{R_{RR}}$$

respectivement la vitesse angulaire de la roue avant gauche, de la roue avant droite, de la roue arrière gauche, et de la roue arrière droite, $V_{véhicule}$ étant la vitesse du véhicule.

De façon préférentielle, la deuxième étape de détermination du rayon relatif de chaque roue s'effectue à partir des équations suivantes :

$$R_{rFL} = \frac{R_{FL}}{\max(R_{FL}, R_{FR}, R_{RL}, R_{RR})}$$

$$R_{rFR} = \frac{R_{FR}}{\max(R_{FL}, R_{FR}, R_{RL}, R_{RR})}$$

$$R_{rRL} = \frac{R_{RL}}{\max(R_{FL}, R_{FR}, R_{RL}, R_{RR})}$$

$$R_{rRR} = \frac{R_{RR}}{\max(R_{FL}, R_{FR}, R_{RL}, R_{RR})}$$

Préférentiellement, un procédé selon l'invention est complété par une étape de contrôle consistant à mesurer au moyen d'un capteur la pression de chaque pneumatique, puis à comparer l'état de gonflage de chaque pneumatique obtenu avec ledit capteur et celui obtenu à partir des rayons relatifs desdits pneumatiques.

On donne ci-après une description détaillée d'un mode de réalisation préféré d'un procédé de diagnostic selon l'invention.

Pour rappel, dans la demande FR2927019A1, le diagnostic consiste à analyser les valeurs de $\overline{CR_1}$, $\overline{CR_2}$ et $\overline{CR_3}$, et à les comparer à des seuils nommés $CR_1^{\max}$, $CR_2^{\max}$ et $CR_3^{\max}$ .

Par exemple dans le cadre d'un sous-gonflage unique :

| Pneu | $\overline{CR_1}$ (diagonales) | $\overline{CR_3}$ (côtés) | $\overline{CR_2}$ (essieux) |
|---|---|---|---|
| ARG | $\overline{CR_1} \geq CR_1^{\max}$ | $\overline{CR_3} \leq -CR_3^{\max}$ | $\overline{CR_2} \geq CR_2^{\max}$ |
| ARD | $\overline{CR_1} \leq -CR_1^{\max}$ | $\overline{CR_3} \geq CR_3^{\max}$ | $\overline{CR_2} \geq CR_2^{\max}$ |
| AVG | $\overline{CR_1} \leq -CR_1^{\max}$ | $\overline{CR_3} \leq -CR_3^{\max}$ | $\overline{CR_2} \leq -CR_2^{\max}$ |

(suite)

| Pneu | $\overline{CR_1}$ (diagonales) | $\overline{CR_3}$ (côtés) | $\overline{CR_2}$ (essieux) |
|---|---|---|---|
| AVD | $\overline{CR_1} \geq CR_1^{max}$ | $\overline{CR_3} \geq CR_3^{max}$ | $\overline{CR_2} \leq -CR_2^{max}$ |

Dans le cadre d'un sous-gonflage simultané sur la diagonale :

| Pneus | $\overline{CR_1}$ $\overline{CR_3}$ (diagonales) (côtés) | $\overline{CR_2}$ (essieux) |
|---|---|---|
| ARG-AVD | $\overline{CR_1} \geq CR_1^{max}$ | * |
| ARD-AVG | $\overline{CR_1} \leq -CR_1^{max}$ | * |

Dans le cadre d'un sous-gonflage simultané de trois pneumatiques :

| Pneus | $\overline{CR_1}$ (diagonales) | $\overline{CR_3}$ (côtés) | $\overline{CR_2}$ (essieux) |
|---|---|---|---|
| AVD-ARD-AVG | $\overline{CR_1} \leq -CR_1^{max}$ | $\overline{CR_3} \geq CR_3^{max}$ | $\overline{CR_2} \leq -CR_2^{max}$ |
| AVD-ARG-AVG | $\overline{CR_1} \geq CR_1^{max}$ | $\overline{CR_3} \leq -CR_3^{max}$ | $\overline{CR_2} \leq -CR_2^{max}$ |
| ARG-AVD-ARD | $\overline{CR_1} \geq CR_1^{max}$ | $\overline{CR_3} \geq CR_3^{max}$ | $\overline{CR_2} \geq CR_2^{max}$ |
| ARG-AVG-ARD | $\overline{CR_1} \leq -CR_1^{max}$ | $\overline{CR_3} \leq -CR_3^{max}$ | $\overline{CR_2} \geq CR_2^{max}$ |

Le problème de cette technique, c'est qu'elle ne traite pas de manière efficace les situations de dégonflages multiples avec des niveaux de dégonflage différents sur les pneumatiques (par exemple, un pneumatique dégonflé à 30 %, un autre à 20 % et un troisième à 10 %)

La présente invention consiste à estimer le rayon relatif de chacune des roues à partir des trois critères $\overline{CR_1}$, $\overline{CR_2}$ et $\overline{CR_3}$ puis de baser le diagnostic sur la variation du rayon relatif des roues.

Le critère $\overline{CR_1}$ compare les vitesses angulaires des paires de roues diagonales :

$$CR_1 = \frac{\omega_{FR}^2 + \omega_{RL}^2}{\omega_{FL}^2 + \omega_{RR}^2} - 1$$

Le critère $CR_2$ compare les vitesses angulaires des paires de roues avant-arrière :

$$CR_2 = \frac{\omega_{RL}^2 + \omega_{RR}^2}{\omega_{FL}^2 + \omega_{FR}^2} - 1$$

Le critère $CR_3$ compare les vitesses angulaires des paires de roues droite-gauche :

$$CR_3 = \frac{\omega_{FR}^2 + \omega_{RR}^2}{\omega_{FL}^2 + \omega_{RL}^2} - 1$$

Sachant que pour chaque roue, la vitesse angulaire se calcule à partir de la vitesse du véhicule et le rayon de la roue considérée :

$$\omega_{FL} = \frac{V_{vehicule}}{R_{FL}} \ ,$$

$$\omega_{FR} = \frac{V_{vehicule}}{R_{FR}} \ ,$$

$$\omega_{RL} = \frac{V_{vehicule}}{R_{RL}}$$

et

$$\omega_{RR} = \frac{V_{vehicule}}{R_{RR}}$$

Les équations précédentes s'écrivent alors :

$$CR_1 = \frac{R_{FL}^2 + R_{RR}^2}{R_{FR}^2 + R_{RL}^2} - 1 \ (1)$$

$$CR_2 = \frac{R_{FL}^2 + R_{FR}^2}{R_{RL}^2 + R_{RR}^2} - 1 \ (2)$$

$$CR_3 = \frac{R_{FL}^2 + R_{RL}^2}{R_{FR}^2 + R_{RR}^2} - 1 \ (3)$$

Pour calculer les rayons $R_{FL}$, $R_{FR}$, $R_{RL}$ et $R_{RR}$ à partir des critères $CR_1$, $CR_2$ et $CR_3$, il manque une équation. On propose donc d'ajouter l'équation :

$$R_{FL}^2 + R_{RR}^2 + R_{FR}^2 + R_{RL}^2 = 1 \ (4)$$

Le système de 4 équations (1), (2), (3) et (4) et à quatre inconnues $R_{FL}$, $R_{FR}$, $R_{RL}$ et $R_{RR}$, se résout alors par exemple par l'intermédiaire de la Symbolic Math Toolbox de Matlab :

$$R_{FL} = \sqrt{2\frac{4\,CR_1 + 4\,CR_2 + 4\,CR_3 + 3\,CR_1\,CR_2 + 3\,CR_1\,CR_3 + 3\,CR_2\,CR_3 + 2\,CR_1\,CR_2\,CR_3 + 4}{(CR_1 + 2) + (CR_2 + 2) + (CR_3 + 2)}}$$

$$R_{FR} = \sqrt{2\frac{4\,CR_2 + CR_1\,CR_2 - CR_1\,CR_3 + CR_2\,CR_3 + 4}{(CR_1 + 2) + (CR_2 + 2) + (CR_3 + 2)}}$$

$$R_{RL} = \sqrt{2\frac{4\,CR_3 - CR_1\,CR_2 + CR_1\,CR_3 + CR_2\,CR_3 + 4}{(CR_1 + 2) + (CR_2 + 2) + (CR_3 + 2)}}$$

$$R_{RR} = \sqrt{2\, \frac{4\,CR_1 + CR_1\,CR_2 + CR_1\,CR_3 - CR_2\,CR_3 + 4}{(CR_1 + 2) + (CR_2 + 2) + (CR_3 + 2)}}$$

On définit alors le rayon relatif de chacune des roues :

$$R_{rFL} = \frac{R_{FL}}{\max(R_{FL}, R_{FR}, R_{RL}, R_{RR})}$$

$$R_{rFR} = \frac{R_{FR}}{\max(R_{FL}, R_{FR}, R_{RL}, R_{RR})}$$

$$R_{rRL} = \frac{R_{RL}}{\max(R_{FL}, R_{FR}, R_{RL}, R_{RR})}$$

$$R_{rRR} = \frac{R_{RR}}{\max(R_{FL}, R_{FR}, R_{RL}, R_{RR})}$$

Tous les rayons relatifs sont inférieurs ou égal à 1. Le rayon du pneumatique le plus gonflé sera forcément égal à 1.

La méthode de diagnostic de la situation de dégonflage consiste alors à comparer le rayon relatif de chacune des roues à un seuil, qui peut se calibrer.

$$Seuil > \min(R_{rFL}, R_{rFR}, R_{rRL}, R_{rRR})$$

Dans un contexte de détection (pas de localisation), si la valeur minimale des rayons relatifs est inférieure à la valeur du seuil, le système va monter l'alerte de sous-gonflage. Néanmoins, cette stratégie peut être utilisée en combinaison d'un SSPP direct (avec capteurs de pression) afin d'améliorer la précision de localisation du problème de sous-gonflage.

La mise au point des seuils est réalisée en utilisant une base de données composée d'un nombre important de tests réels, lesquels ont été réalisés sous différentes conditions et avec des paramètres différents (masse du véhicule, nombre de roues sous-gonflées, pression des pneumatiques, type de route...).

**Revendications**

**1.** Procédé de diagnostic de l'état de gonflage de chaque pneumatique d'un véhicule comprenant une paire avant de pneumatiques droite et gauche et une paire arrière de pneumatiques droite et gauche, ledit procédé comprenant les étapes suivantes,

- une première étape de détermination du rayon réel $R_{FL}$, $R_{FR}$, $R_{RL}$ et $R_{RR}$ de chacune des quatre roues, ce procédé étant **caractérisé par le fait que** cette détermination du rayon de chacune des quatre roues de cette première étape est réalisée à partir de la détermination d'un premier critère $CR_1$ comparant les vitesses angulaires des paires de roues diagonales, d'un deuxième critère $CR_2$ comparant les vitesses angulaires des paires de roues avant et arrière, et d'un troisième critère $CR_3$ comparant les vitesses angulaires des paires de roues droite et gauche, et à partir d'une équation arbitraire reliant les quatre rayons réels $R_{FL}$, $R_{FR}$, $R_{RL}$, $R_{RR}$ entre eux, où $R_{FL}$, $R_{FR}$, $R_{RL}$ et $R_{RR}$ sont respectivement le rayon de la roue avant gauche, le rayon de la roue avant droite, le rayon de la roue arrière gauche et le rayon de la roue arrière droite,

- une deuxième étape de détermination du rayon relatif de chacune des quatre roues en calculant le rapport de chacun des rayons réels déterminés à l'étape précédente sur un rayon réel maximum correspondant à la valeur maximale relevée parmi les quatre rayons réels $R_{FL}$, $R_{FR}$, $R_{RL}$ et $R_{RR}$ déterminés lors de ladite étape précédente,

- une étape de diagnostic de l'état de gonflage de chacune des roues à partir des valeurs des rayons relatifs déterminées à l'étape précédente.

2. Procédé selon la revendication 1, **caractérisé en ce que** l'équation arbitraire permettant de réaliser la première étape de détermination est donnée par :

$$R_{FL}^2 + R_{RR}^2 + R_{FR}^2 + R_{RL}^2 = 1$$

3. Procédé selon l'une quelconque des revendications 1 ou 2, caractérisé ce que l'étape de diagnostic consiste à comparer le rayon relatif de chacune des roues à une valeur seuil qui peut se calibrer de la manière suivante : *Seuil* > min($R_{rFL}$, $R_{rFR}$, $R_{rRL}$, $R_{rRR}$) où $R_{rFL}$, $R_{rFR}$, $R_{rRL}$, et $R_{rRR}$ sont respectivement les rayons relatifs de la roue avant gauche, de la roue avant droite, de la roue arrière gauche et de la roue arrière droite.

4. Procédé selon la revendication 3, **caractérisé en ce que** l'étape de diagnostic s'effectue en attribuant une valeur de 1 au rayon relatif de la roue la plus gonflée et à exprimer la valeur du rayon relatif des autres roues en pourcentage du rayon de ladite roue la plus gonflée, puis en mesurant l'écart entre le rayon relatif de chaque roue et la valeur de 1, et enfin en comparant chaque écart mesuré avec une valeur seuil prédéterminée.

5. Procédé selon l'une quelconque des revendications 3 ou 4, **caractérisé en ce que** les valeurs seuils sont mises au point à partir d'une base de données répertoriant les conditions et les résultats d'un grand nombre de tests réels, et **en ce que** lesdites conditions sont représentées par au moins un paramètre à choisir parmi au moins la masse du véhicule, le nombre de roues sous-gonflées, la pression des pneumatiques, le type de route empruntée par le véhicule et la météorologie.

6. Procédé selon l'une quelconque des revendications 1 à 4, **caractérisé en ce que** les trois critères sont déterminés à partir des équations suivantes :

$$CR_1 = \frac{\omega_{FR}^2 + \omega_{RL}^2}{\omega_{FL}^2 + \omega_{RR}^2} - 1$$

$$CR_2 = \frac{\omega_{RL}^2 + \omega_{RR}^2}{\omega_{FL}^2 + \omega_{FR}^2} - 1$$

$$CR_3 = \frac{\omega_{FR}^2 + \omega_{RR}^2}{\omega_{FL}^2 + \omega_{RL}^2} - 1$$

Avec

$$\omega_{FL} = \frac{V_{vehicule}}{R_{FL}}$$

$$\omega_{FR} = \frac{V_{vehicule}}{R_{FR}}$$

$$\omega_{RL} = \frac{V_{vehicule}}{R_{RL}}$$

$$\omega_{RR} = \frac{V_{vehicule}}{R_{RR}}$$

respectivement la vitesse angulaire de la roue avant gauche, de la roue avant droite, de la roue arrière gauche, et de la roue arrière droite, $V_{véhicule}$ étant la vitesse du véhicule.

7. Procédé selon l'une quelconque des revendications 1 à 5, **caractérisé en ce que** la deuxième étape de détermination du rayon relatif de chaque roue s'effectue à partir des équations suivantes :

$$R_{rFL} = \frac{R_{FL}}{\max(R_{FL}, R_{FR}, R_{RL}, R_{RR})}$$

$$R_{rFR} = \frac{R_{FR}}{\max(R_{FL}, R_{FR}, R_{RL}, R_{RR})}$$

$$R_{rRL} = \frac{R_{RL}}{\max(R_{FL}, R_{FR}, R_{RL}, R_{RR})}$$

$$R_{rRR} = \frac{R_{RR}}{\max(R_{FL}, R_{FR}, R_{RL}, R_{RR})}$$

8. Procédé selon l'une quelconque des revendications 1 à 7, **caractérisé en ce qu'**il est complété par une étape de contrôle consistant à mesurer au moyen d'un capteur la pression de chaque pneumatique, puis à comparer l'état de gonflage de chaque pneumatique obtenu avec ledit capteur et celui obtenu à partir des rayons relatifs desdits pneumatiques.

**Patentansprüche**

1. Verfahren zur Diagnose des Druckzustands jedes Luftreifens eines Fahrzeugs, das ein vorderes Paar von rechten und linken Luftreifen und ein hinteres Paar von rechten und linken Luftreifen enthält, wobei das Verfahren die folgenden Schritte enthält:

- einen ersten Schritt der Bestimmung des realen Radius $R_{FL}$, $R_{FR}$, $R_{RL}$ und $R_{RR}$ jedes der vier Räder, wobei dieses Verfahren **dadurch gekennzeichnet ist, dass** diese Bestimmung des Radius jedes der vier Räder dieses ersten Schritts ausgehend von der Bestimmung eines ersten Kriteriums $CR_1$, das die Winkelgeschwindigkeiten der diagonalen Räderpaare vergleicht, eines zweiten Kriteriums $CR_2$, das die Winkelgeschwindigkeiten der vorderen und hinteren Räderpaare vergleicht, und eines dritten Kriteriums $CR_3$, das die Winkelgeschwindigkeiten der rechten und linken Räderpaare vergleicht, und ausgehend von einer willkürlichen Gleichung durchgeführt wird, die die vier realen Radien $R_{FL}$, $R_{FR}$, $R_{RL}$, $R_{RR}$ miteinander verbindet, wobei $R_{FL}$, $R_{FR}$, $R_{RL}$ und $R_{RR}$ der Radius des linken Vorderrads, der Radius des rechten Vorderrads, der Radius des linken Hinterrads bzw. der Radius des rechten Hinterrads sind,
- einen zweiten Schritt der Bestimmung des relativen Radius jedes der vier Räder durch Berechnen des Verhältnisses jedes der im vorhergehenden Schritt bestimmten realen Radien zu einem maximalen realen Radius, der dem unter den im vorhergehenden Schritt bestimmten vier realen Radien $R_{FL}$, $R_{FR}$, $R_{RL}$ und $R_{RR}$ erfassten maximalen Wert entspricht,
- einen Schritt der Diagnose des Druckzustands jedes der Räder ausgehend von den Werten der im vorhergehenden Schritt bestimmten relativen Radien.

2. Verfahren nach Anspruch 1, **dadurch gekennzeichnet, dass** die willkürliche Gleichung, die es ermöglicht, den ersten Bestimmungsschritt durchzuführen, angegeben wird durch:

$$R_{FL}^2 + R_{RR}^2 + R_{FR}^2 + R_{RL}^2 = 1$$

3. Verfahren nach einem der Ansprüche 1 oder 2, **dadurch gekennzeichnet, dass** der Diagnoseschritt darin besteht, den relativen Radius jedes der Räder mit einem Schwellwert zu vergleichen, der folgendermaßen kalibriert werden kann:

Schwelle > min($R_{rFL}$, $R_{rFR}$, $R_{rRL}$, $R_{rRR}$),
wobei $R_{rFL}$, $R_{rFR}$, $R_{rRL}$ und $R_{rRR}$ die relativen Radien des linken Vorderrads, des rechten Vorderrads, des linken Hinterrads bzw. des rechten Hinterrads sind.

4.  Verfahren nach Anspruch 3, **dadurch gekennzeichnet, dass** der Diagnoseschritt ausgeführt wird, indem ein Wert von 1 dem relativen Radius des am stärksten aufgepumpten Rads zugewiesen wird und der Wert des relativen Radius der anderen Räder im Prozentsatz des Radius des am stärksten aufgepumpten Rads ausgedrückt wird, dann die Abweichung zwischen dem relativen Radius jedes Rads und dem Wert von 1 gemessen wird, und schließlich jede gemessene Abweichung mit einem vorbestimmten Schwellwert verglichen wird.

5.  Verfahren nach einem der Ansprüche 3 oder 4, **dadurch gekennzeichnet, dass** die Schwellwerte ausgehend von einer Datenbank eingestellt werden, die die Bedingungen und die Ergebnisse einer großen Anzahl von realen Tests auflistet, und dass die Bedingungen durch mindestens einen Parameter dargestellt werden, der ausgewählt wird unter mindestens der Masse des Fahrzeugs, der Anzahl von Rädern mit zu niedrigem Luftdruck, dem Druck der Luftreifen, der Art der vom Fahrzeug befahrenen Straße und der Wetterlage.

6.  Verfahren nach einem der Ansprüche 1 bis 4, **dadurch gekennzeichnet, dass** die drei Kriterien ausgehend von den folgenden Gleichungen bestimmt werden:

$$CR_1 = \frac{\omega_{FR}^2 + \omega_{RL}^2}{\omega_{FL}^2 + \omega_{RR}^2} - 1$$

$$CR_2 = \frac{\omega_{RL}^2 + \omega_{RR}^2}{\omega_{FL}^2 + \omega_{FR}^2} - 1$$

$$CR_3 = \frac{\omega_{FR}^2 + \omega_{RR}^2}{\omega_{FL}^2 + \omega_{RL}^2} - 1$$

mit

$$\omega_{FL} = \frac{V_{vehicule}}{R_{FL}}$$

$$\omega_{FR} = \frac{V_{vehicule}}{R_{FR}}$$

$$\omega_{RL} = \frac{V_{vehicule}}{R_{RL}}$$

$$\omega_{RR} = \frac{V_{vehicule}}{R_{RR}}$$

der Winkelgeschwindigkeit des linken Vorderrads, des rechten Vorderrads, des linken Hinterrads bzw. des rechten Hinterrads, wobei $V_{véhicule}$ die Geschwindigkeit des Fahrzeugs ist.

7.  Verfahren nach einem der Ansprüche 1 bis 5, **dadurch gekennzeichnet, dass** der zweite Schritt der Bestimmung des relativen Radius jedes Rads ausgehend von den folgenden Gleichungen ausgeführt wird:

$$R_{rFL} = \frac{R_{FL}}{\max\left(R_{FL}, R_{FR}, R_{RL}, R_{RR}\right)}$$

$$R_{rFR} = \frac{R_{FR}}{\max\left(R_{FL}, R_{FR}, R_{RL}, R_{RR}\right)}$$

$$R_{rRL} = \frac{R_{RL}}{\max\left(R_{FL}, R_{FR}, R_{RL}, R_{RR}\right)}$$

$$R_{rRR} = \frac{R_{RR}}{\max\left(R_{FL}, R_{FR}, R_{RL}, R_{RR}\right)}$$

8. Verfahren nach einem der Ansprüche 1 bis 7, **dadurch gekennzeichnet, dass** es durch einen Kontrollschritt vervollständigt wird, der darin besteht, mittels eines Sensors den Druck jedes Luftreifens zu messen, dann den mit dem Sensor erhaltenen Druckzustand jedes Luftreifens und denjenigen zu vergleichen, der ausgehend von den relativen Radien der Luftreifen erhalten wird.

**Claims**

1. Method for diagnosing the inflation condition of each tyre of a vehicle comprising a front pair of right and left tyres and a rear pair of right and left tyres, said method comprising the following steps,

   - a first step of determining the actual radius $R_{FL}$, $R_{FR}$, $R_{RL}$ and $R_{RR}$ of each of the four wheels, this method being **characterized in that** this determination of the radius of each of the four wheels in this first step is performed by determining a first criterion $CR_1$ comparing the angular speeds of the pairs of wheels on a diagonal, a second criterion $CR_2$ comparing the angular speeds of the pairs of front and rear wheels, and a third criterion $CR_3$ comparing the angular speeds of the pairs of right and left wheels, and by using an arbitrary equation linking the four actual radii $R_{FL}$, $R_{FR}$, $R_{RL}$ and $R_{RR}$ with one another, where $R_{FL}$, $R_{FR}$, $R_{RL}$ and $R_{RR}$ are respectively the radius of the front left wheel, the radius of the front right wheel, the radius of the rear left wheel and the radius of the rear right wheel,
   - a second step of determining the relative radius of each of the four wheels by calculating the ratio of each of the actual radii determined in the previous step to a maximum actual radius corresponding to the maximum recorded value out of the four actual radii $R_{FL}$, $R_{FR}$, $R_{RL}$ and $R_{RR}$ determined during said previous step,
   - a step of diagnosing the inflation condition of each of the wheels from the relative-radii values determined in the previous step.

2. Method according to Claim 1, **characterized in that** the arbitrary equation that allows the first, determining, step to be performed, is given by:

$$R_{FL}^2 + R_{RR}^2 + R_{FR}^2 + R_{RL}^2 = 1$$

3. Method according to either one of Claims 1 and 2, **characterized in that** the diagnosis step consists in comparing the relative radius of each of the wheels with a threshold value that can be calibrated as follows:
   *Threshold > min($R_{rFLr}$ $R_{rFR}$, $R_{rRL}$, $R_{rRR}$)*, where $R_{rFL}$, $R_{rFR}$, $R_{rRL}$ and $R_{rRR}$ are respectively the relative radii of the front left wheel, of the front right wheel, of the rear left wheel and of the rear right wheel.

4. Method according to Claim 3, **characterized in that** the diagnosis step is carried out by assigning a value of 1 to the relative radius of the most inflated wheel and in expressing the value of the relative radius of the other wheels as a percentage of the radius of said most inflated wheel, then by measuring the discrepancy between the relative radius of each wheel and the value of 1, and finally by comparing each measured discrepancy with a predetermined threshold value.

5. Method according to either one of Claims 3 and 4, **characterized in that** the threshold values are optimized from a database listing the conditions and the results of a great many actual tests, and **in that** said conditions are represented by at least one parameter chosen from at least the mass of the vehicle, the number of under-inflated wheels, the tyre pressures, the type of journey undertaken by the vehicle, and the weather conditions.

6. Method according to any one of Claims 1 to 4, **characterized in that** the three criteria are determined using the following equations:

$$CR_1 = \frac{\omega_{FR}^2 + \omega_{RL}^2}{\omega_{FL}^2 + \omega_{RR}^2} - 1$$

$$CR_2 = \frac{\omega_{RL}^2 + \omega_{RR}^2}{\omega_{FL}^2 + \omega_{FR}^2} - 1$$

$$CR_3 = \frac{\omega_{FR}^2 + \omega_{RR}^2}{\omega_{FL}^2 + \omega_{RL}^2} - 1$$

with

$$\omega_{FL} = \frac{V_{vehicle}}{R_{FL}}$$

$$\omega_{FR} = \frac{V_{vehicle}}{R_{FR}}$$

$$\omega_{RL} = \frac{V_{vehicle}}{R}$$

$$\omega_{RR} = \frac{V_{vehicle}}{R_{RR}}$$

which are respectively the angular speed of the front left wheel, of the front right wheel, of the rear left wheel and of the rear right wheel, $V_{vehicle}$ being the speed of the vehicle.

7. Method according to any one of Claims 1 to 5, **characterized in that** the second step of determining the relative radius of each wheel is performed using the following equations:

$$R_{rFL} = \frac{R_{FL}}{\max\left(R_{FL}, R_{FR}, R_{RL}, R_{RR}\right)}$$

$$R_{rFR} = \frac{R_{FR}}{\max\left(R_{FL}, R_{FR}, R_{RL}, R_{RR}\right)}$$

$$R_{rRL} = \frac{R_{RL}}{\max\left(R_{FL}, R_{FR}, R_{RL}, R_{RR}\right)}$$

$$R_{rRR} = \frac{R_{RR}}{\max\left(R_{FL}, R_{FR}, R_{RL}, R_{RR}\right)}$$

8. Method according to any one of Claims 1 to 7, **characterized in that** it is supplemented by a checking step that consists in using a sensor to measure the pressure of each tyre, then in comparing the inflation condition of each tyre, as obtained with said sensor, with that obtained from the relative radii of said tyres.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2927019
- EP 0489563 A1
- FR 2927019 A1